# EUROPÄISCHE PATENTSCHRIFT

(11) **EP 0 648 963 B1**
(45) Veröffentlichungstag und Bekanntmachung des Hinweises auf die Patenterteilung: **29.05.1996**
(21) Anmeldenummer: 94890159.0
(22) Anmeldetag: 04.10.1994
(51) Int. Cl.: F16K 11/078

(54) **Einhebel-Mischventil**
Single-handle mixing valve
Mitigeur à levier unique

(30) Priorität: 18.10.1993 AT 2088/93
(43) Veröffentlichungstag der Anmeldung: 19.04.1995
(73) Patentinhaber: Kerox Aluminiumoxyd Keramik Ges.m.b.H., A-7053 Hornstein (AT)
(72) Erfinder: Bolgar, György, D-7000-Eisenstadt (DE); Vidor, Gyözö Ing., H-1113 Budapest (HU)
(74) Vertreter: Rippel, Andreas, Dipl.-Ing.

(56) Entgegenhaltungen:
- EP-A- 0 162 342
- EP-A- 0 392 441
- CH-A- 654 088
- GB-A- 2 108 634
- GB-A- 2 154 705
- GB-A- 2 192 256

## Beschreibung

Die Erfindung bezieht sich auf ein Einhebel-Mischventil gemäß dem Oberbegriff des Anspruchs 1. Ein derartiges Mischventil ist aus der CH-A-654088 (Figur 9) bekannt.

Ein wesentliches Merkmal der Mischventile ist die sogenannte "Komfortzone" bzw. nach europäischer Norm die "Referenzzone". Die Komfortzone ist jener in Winkelgraden der Mischbewegung angegebene Bereich, in dem die Temperatur des austretenden Wassers in einem der Körpertemperatur nahen Temperaturbereich mit dem Steuerhebel fein reguliert werden kann. Dieser der Körpertemperatur nahe Temperaturbereich liegt nach älterer Auffassung zwischen 30 und 45 ° C. Bei bekannten Mischventilen liegt die Komfortzone zwischen 30 und 40 Winkelgraden.

In der CH-A5-654 088 ist ein Einhebel-Mischventil beschrieben, bei dem der Einlassdurchlass der Steuerscheibe in seiner Längsmitte durch einen Vorsprung verengt ist. Dadurch soll die Komfortzone erweitert werden, wobei jedoch nach den Angaben in der Patentschrift auch nicht mehr als 30 bis 40 Winkelgrade erreicht werden. Außerdem ist die Komfortzone nicht sehr ausgeprägt.

In der EP-A2-0 162 342 ist ein Einhebel-Mischventil beschrieben, dessen Steuerfläche mehrere Öffnungen aufweist, damit entweder eine Vergrößerung des Einlaßquerschnittes erreicht wird, oder daß zwei verschiedene Auslässe gesteuert werden können. Eine Vergrößerung der Komfortzone ist damit nicht zu erreichen.

Die Erfindung hat es sich zum Ziel gesetzt, ein Einhebel-Mischventil der eingangs genannten Art zu schaffen, dessen Komfortzone gegenüber den bekannten Mischventilen wesentlich erweitert ist. Erreicht wird dies dadurch, daß die Einlaßscheibe mindestens zwei Kaltwassereinlässe und mindestens zwei Warmwassereinlässe aufweist, wobei sowohl die Kaltwassereinlässe als auch die Warmwassereinlässe durch Verteilerkanäle auf der Wassereinlaßseite der Einlaßscheibe verbunden sind.

Durch die erfindungsgemäße Anordnung wird erreicht, daß z.B. bei Vergrößern des Kaltwassereinlasses durch Verdrehen des Steuerhebels zwar der eine Warmwassereinlaß, der Haupteinlaß, verkleinert wird, gleichzeitig jedoch der andere Warmwassereinlaß, der Nebeneinlaß, geöffnet bzw. vergrößert wird, sodaß in der Summe die Warmwassereinlaßgröße im wesentlichen unverändert bleibt oder nur unwesentlich verkleinert wird. Das Gleiche gilt bei Bewegung des Steuerhebels nach der anderen Richtung, d.h. bei Vergrößern des Warmwassereinlasses.

Bei einem erfindungsgemäßen Mischventil wird bei Verdrehen des Steuerhebels von der mittleren Mischstellung weg die Temperatur des austretenden Wassers viel langsamer kälter bzw. wärmer. Bei einem Mischventil mit einem üblichen Arbeitsdrehwinkel von 120 ° kann durch die Erfindung die Komfortzone fast 80 Winkelgrad erreichen.

Bei einem erfindungsgemäßen Mischventil bestehen die Scheiben der Flachdichtung zweckmäßig aus Oxydkeramik.

Es ist ferner von Vorteil, wenn die Einlässe der Einlaßscheibe von den gleichen Radien begrenzt werden und auch die Steuerkanten der Steuerscheibe diese Radien aufweisen.

Bei einem Einhebel-Mischventil mit einem Arbeitsdrehwinkel von 120 Grad beträgt erfindungsgemäß die Bogenlänge der einen Kalt- und Warmwassereinlässe der Einlaßscheibe etwa ein Drittel der Bogenlänge der anderen Kalt- und Warmwassereinlässe und es ist die Breite der einen Steueröffnung der Steuerscheibe gleich der Entfernung der einen Kalt- und Warmwassereinlässe voneinander.

Durch die erfindungsgemäßen Maßnahmen ist es aber auch möglich, den Arbeitsdrehwinkel des Steuerhebels auf etwa 180 ° zu erhöhen. Dadurch wird die Konfortzone weiter vergrößert, nämlich etwa auf das Zweifache des ursprünglichen Wertes. Bei einem solchen erfindungsgemäßen Einhebel-Mischventil ist die Bogenlänge der einen Kalt- und Warmwassereinlässe der Einlaßscheibe etwa gleich der Bogenlänge der anderen Kalt- und Warmwassereinlässe, und es ist die Breite der einen Steueröffnung der Steuerscheibe gleich der Entfernung der einen Kalt- und Warmwassereinlässe voneinander, wobei die Entfernung zwischen den Kaltwassereinlässen bzw. zwischen den Warmwassereinlässen diesen Wert um ungefähr 1,5 mm übersteigt.

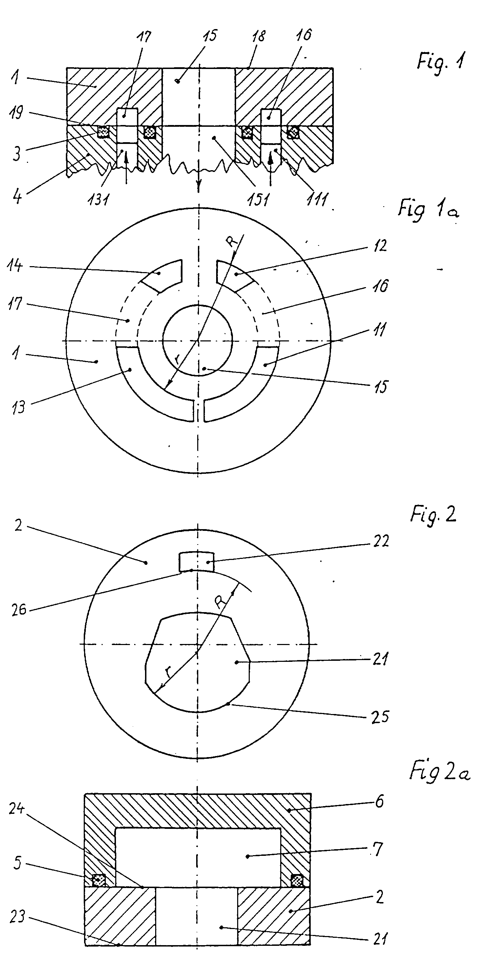

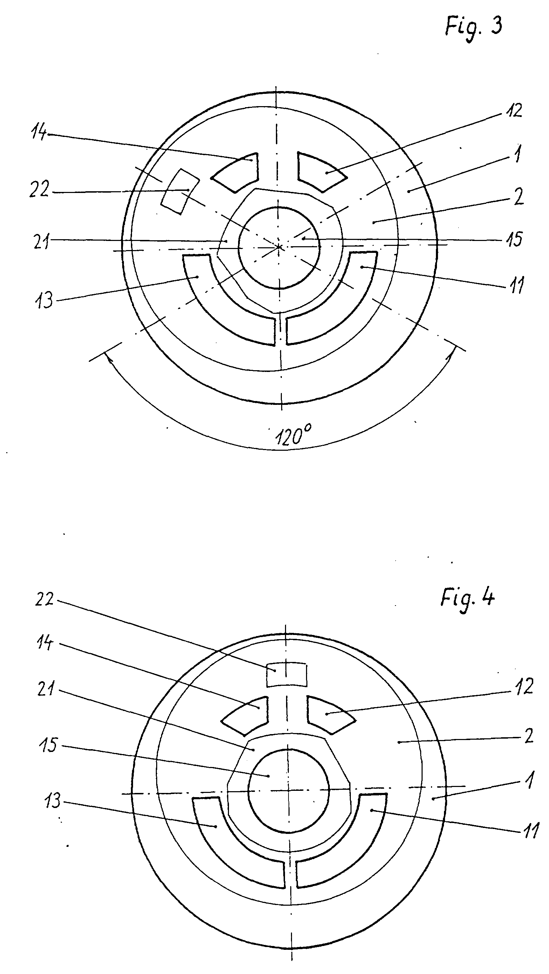

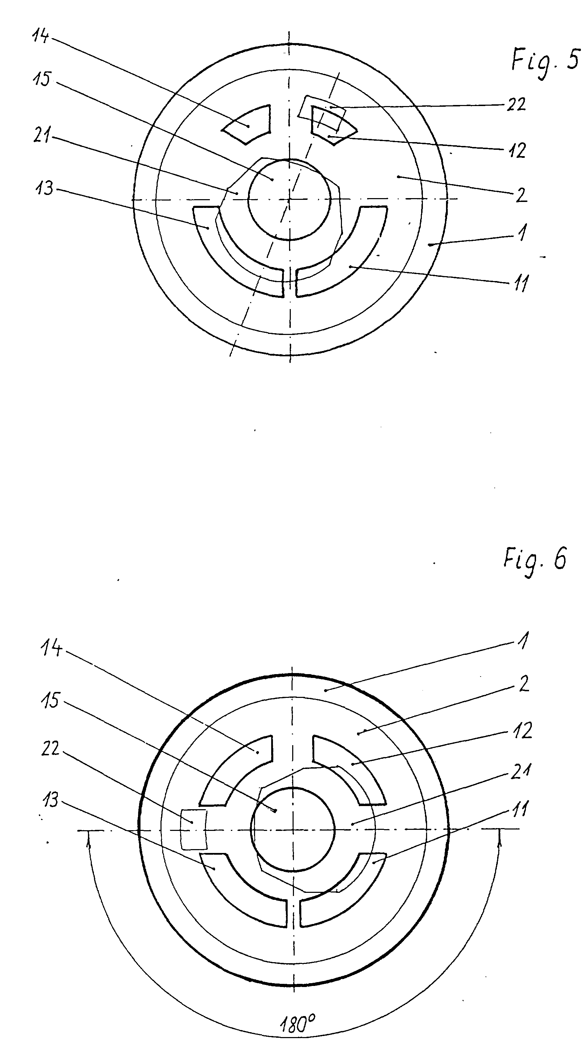

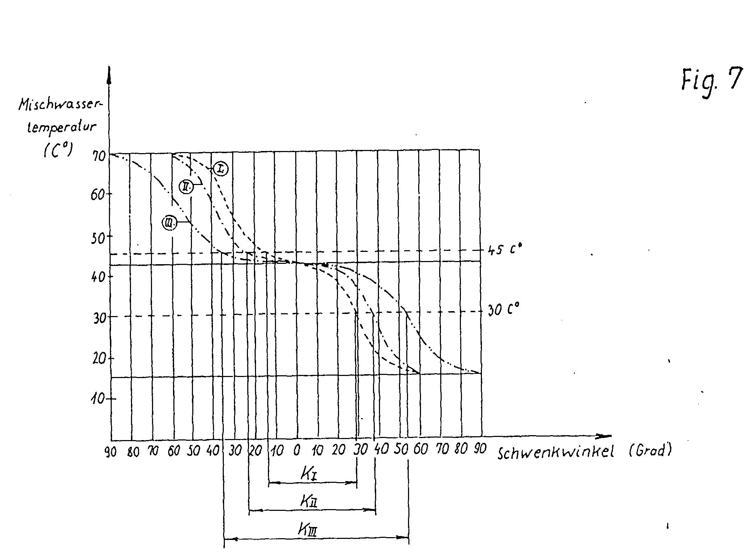

Nachstehend ist die Erfindung anhand von in den Zeichnungen dargestellten Ausführungsbeispielen näher beschrieben, ohne jedoch auf diese Beispiele beschränkt zu sein. Dabei zeigen: Fig. 1 einen Schnitt durch eine Einlaßscheibe mit den angrenzenden Kartuschenteilen; Fig. 1a die Draufsicht auf die Einlaßscheibe nach Fig. 1; Fig. 2 eine Ansicht einer Steuerscheibe von unten; Fig. 2a einen Schnitt durch die Steuerscheibe nach Fig. 2 mit den angrenzenden Kartuschenteilen; Fig. 3 übereinander gezeichnete Draufsichten der Einlaß- und Steuerscheibe in der äußersten Mischstellung (Kalt, in geschlossenem Zustand); Fig. 4 eine der Fig. 3 entsprechende Darstellung in mittlerer Mischstellung; Fig. 5 eine den Fig. 3 und 4 entsprechende Darstellung in etwa halb geöffnetem Zustand, in "Warm"-Richtung gedreht; Fig. 6 in einer den Fig. 3 bis 5 entsprechenden Darstellung eine weitere Ausführungsform der Erfindung in "Kalt-Stellung" bei etwa halbgeöffnetem Zustand; Fig. 7 ein Diagramm zur Darstellung der Veränderung der Mischwassertemperatur in Abhängigkeit vom Verdrehwinkel des Steuerhebels.

Die Einlaßscheibe 1 gemäß den Fig. 1 und 1a ist mit dem Kartuschenboden 4 gegen Verdrehung gesichert verbunden. An der dem Kartuschenboden 4 abgelegenen Seite ist auf einer Hälfte ein Kaltwassereinlaß 13, im folgenden Kaltwasserhaupteinlaß bezeichnet, und ein Kaltwassereinlaß 14, im folgenden Kaltwassernebeneinlaß bezeichnet, angeordnet. Auf der anderen Hälfte der Einlaßscheibe 1 ist ein Warmwassereinlaß 11, im folgenden Warmwasserhaupteinlaß bezeichnet, und ein Warmwassereinlaß 12, im folgenden Warmwassernebeneinlaß bezeichnet, angeordnet. Alle Einlässe werden sowohl außen als auch innen von den gleichen Radien R und r begrenzt.

An der am Kartuschenboden 4 anliegenden Fläche sind Verteilerkanäle 16 und 17 ausgebildet, die die Haupteinlässe mit den zugehörigen Nebeneinlässen verbinden. Im gezeichneten Beispiel sind die Verteilerkanäle 16 und 17 sowohl in der Einlaßscheibe 1 als auch im Kartuschenboden 4 ausgebildet. Es wäre aber auch möglich, diese Verteilerkanäle 16 und 17 nur in der Einlaßscheibe 1 oder nur im Kartuschenboden 4 anzuordnen. Wesentlich ist die Verbindung der Haupteinlässe mit den zugehörigen Nebeneinlässen.

Durch eine Öffnung 111 des Kartuschenbodens 4 gelangt kaltes Wasser, durch eine weitere Öffnung 131 im Kartuschenboden 4 gelangt warmes Wasser zu den entsprechenden Verteilerkanälen 16 und 17. Zur Abdichtung zwischen dem Kartuschenboden 4 und der Fläche 19 der Einlaßscheibe 1 sind Gummiformdichtungen eingelegt.

Die Steuerscheibe 2 gemäß den Fig. 2 und 2a liegt mit ihrer in Fig. 2 sichtbaren Fläche auf der in Fig. 1a sichtbaren Fläche der Einlaßscheibe 1 auf und auf ihr liegt eine zweckmäßig aus Kuststoff gespritzte Keramikaufnahme 6, wobei zur Abdichtung eine Dichtung 5 angeordnet ist. In der auf der Einlaßscheibe 1 aufliegenden Fläche der Steuerscheibe 2 ist eine Steueröffnung 21, im folgenden Steuerhauptöffnung genannt, und eine Steueröffnung 22, im folgenden Steuernebenöffnung genannt, angeordnet. Die Steuerkanten 25 und 26 dieser beiden Steueröffnungen besitzen die gleichen Radien r und R wie die Wassereinlässe der Einlaßscheibe 1.

Das von den Öffnungen 111 und 131 kommende Wasser gelangt über die Verteilerkanäle 16, 17 und die von den Steueröffnungen 21, 22 gesteuerten Wassereinlässe 11, 12 bzw. 13, 14 in den Mischraum 7 der Keramikaufnahme 6, von wo das gemischte Wasser durch die Hauptöffnung 21 der Steuerscheibe 2, weiters durch den Mischwasserdurchgang 15 der Einlaßscheibe 1 und schließlich durch den Mischwasserauslauf 151 des Kartuschenbodens 4 zum Auslauf der Armatur fließt.

Die Drehung bzw. Verschiebung der Steuerscheibe erfolgt in bekannter Weise über einen Steuerhebel (nicht dargestellt).

In Fig. 3 sind die Einlaßscheibe 1 und die Steuerscheibe 2 übereinander gezeichnet, wobei die Steuerscheibe 2 in die geschlossene Stellung verschoben und in die Kaltstellung verdreht ist.

Die Darstellung nach Fig. 4 zeigt die Steuerscheibe 2 wieder in die geschlossene Stellung verschoben, aber in die mittlere Mischstellung verdreht.

Wird gemäß Fig. 5 die Steuerscheibe 2 in eine mittlere Öffnungsstellung verschoben und in Richtung "Warm" verdreht, wird der offene Querschnitt des Warmwasserhaupteinlasses 13 vergrößert und der offene Querschnitt des Kaltwasserhaupteinlasses 11 verkleinert. Im Gegensatz zu den bekannten Ausführungen wird jedoch gleichzeitig durch die Steuernebenöffnung 22 der Kaltwassernebeneinlaß 12 geöffnet, sodaß die Menge des Kaltwassers nicht oder nur geringfügig gedrosselt wird. Die Temperatur des austretenden Mischwassers erhöht sich daher im Vergleich zu den bekannten Ausführungen weniger, d.h. die Komfort- oder Referenzzone wird erweitert und zwar um mindestens 50 %.

Beim Ausführungsbeispiel nach Fig. 6 sind die Bogenlängen der Wassernebeneinlässe 12 und 14 etwa gleich den Bogenlängen der Wasserhaupteinlässe 11 und 13. Die Breite der Steuernebenöffnung 22 der Steuerscheibe 2 ist etwa gleich der Entfernung der Wassernebeneinlässe 12 und 14 voneinander und die Entfernung zwischen den Kaltwassereinlässen 11 und 12 sowie den Warmwassereinlässen 13 und 14 übersteigt, zur Erreichung einer sicheren Schließung, diesen Wert um ungefähr 1,5 mm.

Durch diese erfindungsgemäße Ausführung eines Einhebel-Mischventils wird der Betriebswinkel bis auf 180 ° vergrößert, wodurch auch die Komfort- oder Referenzzone wesentlich vergrößert wird.

In Fig. 7 ist anhand einer in Abhängigkeit vom Schwenkwinkel und der Mischwassertemperatur gezeichneten Kurvenschar die Vergrößerung der Komfortzone zufolge der erfindungsgemäßen Maßnahmen gezeigt. Dabei entspricht die Kurve I dem Stand der Technik, die Kurve II einer Ausführung gemäß den Fig. 3 bis 5 und die Kurve III einer Ausführung gemäß Fig. 6.

## Patentansprüche

1. Einhebel-Mischventil zur Mischung von Kalt- und Warmwasser mit einer Kaltwasser- und einer Warmwassereinlaßöffnung sowie einer Auslaßöffnung für das gemischte Wasser, und mit einer Flachdichtung, bestehend aus einer festen Einlaßscheibe (1) und einer über einen Steuerhebel bewegbaren Steuerscheibe (2),
wobei die Steuerscheibe (2) mindestens zwei Steueröffnungen (21, 22) aufweist, die miteinander durch einen Mischraum (7) verbunden sind, und wobei durch eine radiale Bewegung der Steuerscheibe (2) die Menge des durchfließenden Wassers, durch eine Drehung der Steuerscheibe (2) die Mischverhältnisse gesteuert werden, **dadurch gekennzeichnet,** daß die Einlaßscheibe (1) mindestens zwei Kaltwassereinlässe (11, 12) und mindestens zwei Warmwassereinlässe (13, 14) aufweist, wobei sowohl die Kaltwassereinlässe als auch die Warmwassereinlässe durch Verteilerkanäle (16, 17) auf der Wassereinlaßseite der Einlaßscheibe (1) verbunden sind.

2. Mischventil nach Anspruch 1, **dadurch gekennzeichnet,** daß die Scheiben (1,2) der Flachdichtung aus Oxydkeramik bestehen.

3. Mischventil nach Anspruch 1 oder 2, **dadurch gekennzeichnet,** daß die Einlässe (11, 12, 13, 14) der Einlaßscheibe von den gleichen Radien begrenzt werden (r, R), und auch die Steuerkanten (25, 26) der Steuerscheibe (2) diese Radien (r, R) aufweisen.

4. Mischventil nach einem der Ansprüche 1 bis 3, **dadurch gekennzeichnet,** daß die Bogenlänge der einen Kalt- und Warmwassereinlässe (12, 14) der Einlaßscheibe (1) etwa ein Drittel der Bogenlänge der anderen Kalt- und Warmwassereinlässe (11, 13) beträgt und daß die Breite der einen Steueröffnung (22) der Steuerscheibe (2) gleich der Entfernung der einen Kalt- und Warmwassereinlässe (12, 14) voneinander ist.

5. Mischventil nach einem der Ansprüche 1 bis 3, **dadurch gekennzeichnet,** daß die Bogenlänge der einen Kalt- und Warmwassereinlässe (12, 14) der Einlaßscheibe (1) etwa gleich der Bogenlänge der anderen Kalt- und Warmwassereinlässe (11, 13) ist, und daß die Breite der einen Steueröffnung (22) der Steuerscheibe (2) gleich der Entfernung der einen Kalt- und Warmwassereinlässe (12, 14) voneinander ist, wobei die Entfernung zwischen den Kaltwassereinlässen (11, 12) bzw. zwischen den Warmwassereinlässen (13, 14) diesen Wert um ungefähr 1,5 mm übersteigt.

## Claims

1. Single-lever mixer valve for mixing cold and warm water with a cold water and a warm water inlet opening as well as an outlet opening for the mixed water, and with a gasket consisting of a fixed inlet disc (1) and a control disc (2) that can be moved via a control lever, the control disc (2) having at least two control openings (21, 22) which are connected with one another by a mixing area, and the amount of water flowing through being controlled by moving the control disc (2) radially, and the mixing proportions being controlled by turning the control disc (2), characterised in that the inlet disc (1) has at least two cold water inlets (11, 12) and at least two warm water inlets (13, 14), both the cold water inlets and the warm water inlets being connected by distributor ducts (16,17) on the water inlet side of the inlet disc (1).

2. Mixer valve according to claim 1, characterised in that the discs (1, 2) of the gasket consist of ceramic oxide.

3. Mixer valve according to claim 1 or 2, characterised in that the inlets (11, 12, 13, 14) of the inlet disc are limited by the same radii (r, R), and the control edges (25, 26) of the control disc (2) have these radii (r, R).

4. Mixer valve according to one of claims 1 to 3, characterised in that the arc length of one of the cold and warm water inlets (12, 14) of the inlet disc (1) is approximately a third of the arc length of the other cold and warm water inlets (11, 13) and that the width of one of the control openings (22) of the control disc (2) is equal to the distance of one of the cold and warm water inlets (12, 14) from one another.

5. Mixer valve according to one of claims 1 to 3, characterised in that the arc length of one of the cold and warm water inlets (12, 14) of the inlet disc (1) is approximately equal to the arc length of the other cold and warm water inlets (11, 13) and that the width of one of the control openings (22) of the control disc (2) is equal to the distance of one of the cold and warm water inlets (12, 14) from one another, the distance between the cold water inlets (11, 12) or between the warm water inlets (13, 14) exceeding this value by approximately 1.5 mm.

## Revendications

1. Mitigeur monocommande pour mélanger de l'eau froide et chaude avec un orifice d'admission d'eau froide et un orifice d'admission d'eau chaude et un orifice de décharge pour l'eau mixte, et avec une garniture plate composée d'un disque d'admission fixe (1) et un disque ae commande (2) opéré à l'aide d'un levier de commande; dans ce dispositif, le mouvement radial du disque de commande (2) règle la quantité de l'eau courante, tandis que la rotation du disque de commande (2) règle les proportions de mélange, **caracterisé en ce que** le disque d'admission (1) est muni d'au moins deux orifices d'admission pour l'eau froide (11, 12) et d'au moins deux orifices d'admission pour l'eau chaude (13, 14), et que non seulement les orifices d'admission pour l'eau froide mais aussi les orifices d'admission pour l'eau chaude sont liés par des conduits de distribution (16, 17) sur la face d'admission d'eau du disque d'admission (1); en ceci, le disque de commande (2) est muni d'au moins deux orifices de commande (21, 22) qui sont liès par une chambre de mélange.

2. Mitigeur selon revendication 1, **caracterisé en ce que** les disques (1, 2) de la garniture plate sont de céramique oxydée.

3. Mitigeur selon revendication 1 ou 2, **caracterisé en ce que** les orifices d'admission (11, 12, 13, 14) du disque d'admission sont bordés des mêmes rayons (r, R) et que les rampes de commande (25, 26) du disque de commande (2) sont munies des mêmes rayons (r, R).

4. Mitigeur selon l'une des revendications 1 à 3, caracterisé en ce que la longueur de l'arc d'un groupe d'orifices d'admission pour l'eau froide et pour l'eau chaude (12, 14) du disque d'admission (1) est approxima-tivement pareille à un tiers de la longueur de l'arc de l'autre groupe d'orifices d'admission pour l'eau froide et pour l'eau chaude (11, 13), et que la largeur d'un orifice de commande (22) du disque de commande (2) est pareille à la distance entre les orifices d'admission pour l'eau froide et pour l'eau chaude (12, 14) du premier groupe.

5. Mitigeur selon l'une des revendications 1 à 3, **caracterisé en ce que** la longueur de l'arc d'un groupe d'orifices d'admission pour l'eau froide et pour l'eau chaude (12, 14) du disque d'admission (1) est approxima-tivement pareille à la longueur de l'arc de l'autre groupe d'orifices d'admission pour l'eau froide et pour l'eau chaude (11, 13), et que la largeur d'un orifice de commande (22) du disque de commande (2) est pareille à la distance entre les orifices d'admission pour l'eau froide et pour l'eau chaude (12, 14) du premier groupe; en ceci, la distance entre les orifices d'admission pour l'eau froide (11, 12) et entre les orifices d'admission pour l'eau chaude (13,14) dépasse cette valeur d'approximativement 1,5 mm.
